# EUROPEAN PATENT SPECIFICATION

(11) **EP 3 172 746 B1**
(45) Date of publication and mention of the grant of the patent: **02.12.2020**
(21) Application number: 15753133.6
(22) Date of filing: 17.07.2015
(51) Int. Cl.: H01C 7/02, H05B 3/12

(54) **CONDUCTIVE POLYMER COMPOSITE AND METHOD OF ITS MANUFACTURING**
LEITFÄHIGER POLYMERVERBUNDSTOFF UND HERSTELLUNGSVERFAHREN DAFÜR
COMPOSITE POLYMÈRE CONDUCTEUR ET SON PROCÉDÉ DE FABRICATION

(30) Priority: 24.07.2014 GB 201413136
(43) Date of publication of application: 31.05.2017
(73) Proprietor: LMK Thermosafe Limited, Haverhill, Suffolk CB9 7AA (GB)
(72) Inventor: BILOTTI, Emiliano, Haverhill Suffolk CB9 7AA (GB)
(74) Representative: Boult Wade Tennant LLP
(86) International application number: PCT/GB2015/052073
(87) International publication number: WO 2016/012762

(56) References cited:
- US-A- 4 286 376
- US-A1- 2009 236 565
- US-B1- 6 315 956
- US-B1- 6 331 586

## Description

The invention relates to conductive polymer composites. In particular, the invention relates to conductive polymer composites for use in heating elements such as, for example, heating elements contained in a flexible heating jacket or a trace heater.

The current heating elements used in container heaters typically require the use of a thermostat to control the temperature. This is not ideal when the heater is used to heat a flammable and/or explosive material, since an electric device such as a thermostat may provide an igniting spark.

The first self-regulated heater was made by Raychem and revolutionized the trace heating market. What made this invention revolutionary at the time was the ability of the material to limit power outputs based on the temperature changes on the surface of the item being heated. Not only did the material allow power control, it also made it easier to design with, install and maintain by making it feasible to cut to length on the field.

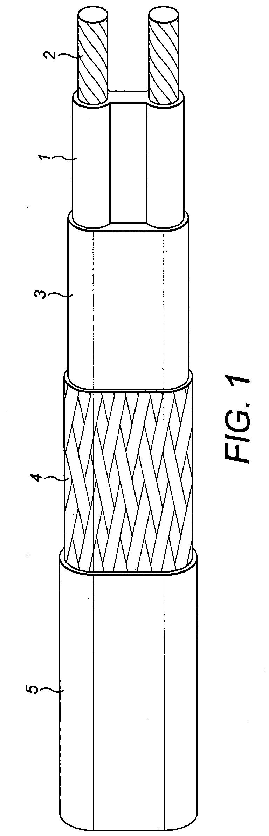

A schematic of a conventional self-regulated heater or cable is shown in Figure 1. Self-regulated heaters or cables are made up of a semi conductive polymer composite 1 (usually cross-linked high density polyethylene filled with carbon black) extruded between two parallel bus conductors 2. The semi conductive polymer composite 1 acts as the heating core. This core is then covered by an insulating polymer jacket 3 and a tinned copper braid 4An optional additional jacket 5 can be used to provide mechanical or corrosion protection for the device.

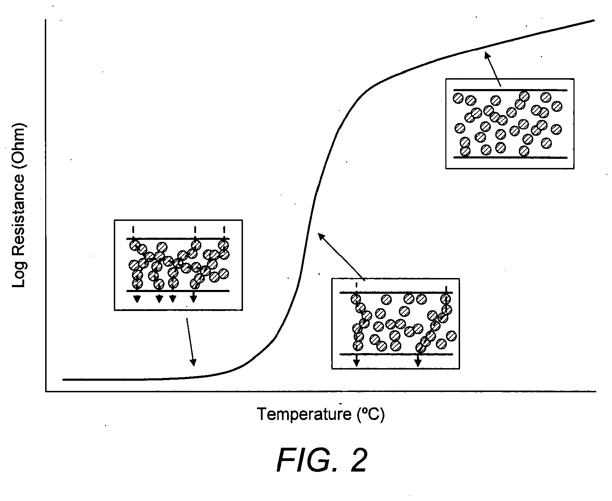

Self-regulated heaters or cables work by changing their electrical resistivity, and hence the power output, with change in temperature. At high temperatures, the resistivity increases and the heat output generated by the self-regulated heaters is reduced accordingly. This is caused by a disruption in the electrical pathways within the conductive filler (e.g. carbon black) network of the heating core. One possible explanation is that the conductive paths formed by the conductive filler get broken due to expansion of the polymer matrix. This reduces the number of effective conductive paths and this leads to a reduction in heat output. Reversely, as the temperature reduces, the polymer matrix contracts and this reduces the distance between the conductive fillers therefore helping in the re-formation of conductive pathways. This results in an increase in heat output. This mechanism is depicted in Figure 2.

Conductive polymer composites (CPC) are formed of insulated polymers filled with conductive fillers. CPC's provide a way of controlling the temperature of a heater by changing its resistivity suddenly within a narrow temperature range. This is known as the positive temperature coefficient (PTC) effect. With a further increase in temperature (after the melting point of semi-crystalline polymers), and depending on the polymer host, CPCs can also exhibit a sharp decrease in resistivity (increase in conductivity). This is known as the negative temperature coefficient (NTC) effect. This effect is undesirable, since it may result in the heater exceeding a desired maximum temperature. In certain CPCs, the NTC effect has been substantially eliminated by crosslinking the polymer using a physical method or a chemical method. However, crosslinking, especially using irradiation, is expensive and results in polymers not being recyclable. Furthermore, cross-linked polymers may be hard to process. In addition, the resulting finished product may exhibit reduced flexibility, and therefore may be unsuitable to be applied to drums, containers or pipes that need to be regularly removed. US2009/236565 A1 relates to a thermoplastic composition with improved positive temperature coefficient behaviour and method for making thereof. US4286376 A relates to a method of making a heater cable of self-limiting conductive extrudates. US6331586B1 relates to conductive polymer blends with finely divided conductive material selectively ocalised in continuous polymer phase or continuous interface.

In order to reduce the manufacturing costs of CPCs, it would be desirable to provide a CPC that exhibits a PTC effect, but no NTC effect, without the need of cross-linking and, preferably, with reduced levels of conductive particles.

The present invention seeks to tackle at least some of the problems associated with the prior art or at least to provide a commercially acceptable alternative solution thereto.

The present invention provides a conductive polymer composite according to claim 1, and a method of manufacturing such conductive polymer composite according to claim 9.

The conductive polymer composite may be advantageously employed in a heating element, for example a heating element in a drum heater, heating jacket or trace heater. In particular, the conductive polymer composite may be advantageously used in a flexible heating jacket.

The inventors have surprisingly found that the conductive polymer composite (CPC) of the present invention exhibits a reduced percolation threshold compared to monophasic CPCs, i.e. conductive pathways may be formed in the CPC with only low levels of conductive particles. Accordingly, the CPC exhibits reduced manufacturing costs.

The first polymer and the second polymer are immiscible, and the two polymers will retain their different physical properties. It is possible to confirm that two polymers are immiscible by the use of, for example, differential scanning calorimetery (DSC). Characteristic temperatures of the two polymers (such as, for example, melting point, glass transition point) will be present in the plots as separate peaks corresponding to the two polymers, respectively.

The majority of the conductive particles are dispersed in only one of the first polymer and the second polymer. Preferably at least 90 wt.% of the conductive particles will be present in only one of the first polymer and the second polymer, more preferably at least 95 wt.% of the conductive particles will be present in only one of the first polymer and the second polymer, even more preferably substantially all of the conductive particles will be present in only one of the first polymer and the second polymer.

Conductive particles may be present at the boundary between the two polymers. When the conductive particles are dispersed in one polymer, boundary conductive particles may partially extend into the other polymer without necessarily being considered "dispersed" in the other polymer. Boundary conductive particles having a larger size and/or larger aspect ratio are more likely to partially extend into the other polymer.

Without being bound by theory, it is considered that when the conductive particles are restricted to one polymer of an immiscible polymer blend, conductive pathways are formed within that one polymer only. While the required concentration of the conductive particles in that one polymer will be the same as the case in which the CPC contains only a single polymer, the overall amount of conductive particles required in the CPC for conductive pathway formation will be reduced. For example, the CPC may exhibit a percolation threshold at less than 30 wt.% conductive particles, typically at less than 25 wt.% conductive particles, more typically at less than 20 wt.% conductive particles, even more typically at less than 15 wt.% conductive particles. The amount of conductive particles required to reach the percolation threshold will, of course, depend on the identity of the conductive particles.

The conductive polymer composite is conductive to the extent that it can be used in a heating element, for example a heating element in a drum heater, heating jacket or trace heater.

The CPC may exhibit a PTC effect. The CPC may exhibit a PTC intensity of greater than 1, typically greater than 3, more typically greater than 5. PTC intensity is defined as log₁₀ (maximum resistivity / minimum resistivity). The CPC may exhibit substantially no NTC effect. The CPC may exhibit a PTC effect with substantially no NTC effect.

The conductive polymer composite may be flexible. This may enable the conductive polymer composite to be advantageously employed in a flexible heating jacket. As discussed in more detail below, such a flexible heating jacket may be folded over on itself a large number of times without causing significant damage to the conductive polymer composite. The conductive polymer composites may exhibit a storage modulus measured by dynamic mechanical analysis (DMA) at room temperature of less than 1000 MPa, typically less than 900 MPa, even more typically less than 800 MPa, even more typically less than 500 MPa, still even more typically less than 100 MPa, still even more typically less than 800 kPa, still even more typically from 10 to 500 kPa.

The conductive polymer composite may comprise, for example, less than 30 wt.% of the conductive particles, or from 1 to 25 wt.% conductive particles, or from 5 to 20 wt.% conductive particles, or from 10 to 15 wt.% conductive particles. The conductive polymer composite may comprise from 10 to less than 30 wt.% conductive particles, preferably from 15 to 25 wt.% conductive particles, more preferably from 18 to 22 wt.% conductive particles.

The first polymer and second polymer are preferably in the form of a blend. A polymer blend (sometimes known as a polymer mixture) is a member of a class of materials analogous to metal alloys, in which at least two polymers are blended together to create a new material with different physical properties. The polymer blend is typically an immiscible polymer blend.

The first polymer and/or the second polymer comprises a plastomer, preferably also an elastomer. Such species may increase the flexibility of the resulting CPC, thereby making the CPC more suitable for incorporation into a heater requiring flexibility such as, for example, a drum heater or trace heater. The term "elastomer" as used herein encompasses a family of polymers exhibiting rubbery behaviour at room temperature and having a glass transition temperature of less than 20 °C, more typically of from -150 °C to -50 °C. Elastomers typically comprise long polymer chains, and typically contain at least some chemical cross-linking. The term "plastomer" as used herein encompasses a thermoplastic elastomer, i.e. an elastomer that can be processed via the melt. Plastomers typically contain physical cross-linking rather than chemical cross-linking, meaning that the cross-linking may disappear on heating but reform on cooling, thereby allowing melt processing of the polymer. The first polymer and/or the second polymer comprises a plastomer.

The plastomer comprises an olefin-based plastomer. A further example of a plastomer useful for understanding the invention, but not forming part of the invention, is a polyurethane based plastomer. Such plastomers exhibit advantageous levels of flexibility and processability. An example of a commercial plastomer suitable for use in the present invention is Versify@ (DOW). Versify@ has a melt flow rate (MFR) of about 2g/10 minutes.

The elastomer preferably comprises a cross-linked elastomer. Such elastomers exhibit advantageous levels of flexibility and processability.

In a preferred embodiment, the majority of the conductive particles are dispersed in the first polymer, forming the continuous phase in the blend, and the second polymer comprises a plastomer and/or an elastomer. In this preferred embodiment, the conductive polymer composite preferably comprises from 1 to 50 vol.% of the second polymer based on the total volume of the conductive polymer composite, more preferably from 10 to 50 vol.%, even more preferably from 20 to 50 vol.%. Such amounts may provide the CPC with particularly desirable levels of flexibility. In this preferred embodiment, the second polymer preferably has a different viscosity than the first polymer, more preferably a higher viscosity than the first polymer. This may ensure that the two polymers are immiscible.

In an alternative embodiment, the majority of the conductive particles are dispersed in the second polymer, the second polymer comprises a plastomer and/or elastomer, and the second polymer forms the continuous phase in the polymer matrix.

The first polymer and the second polymer are preferably co-continuous, i.e. there are no portions of the first polymer isolated from the rest of the first polymer and no portions of the second polymer isolated from the rest of the second polymer (if one of the first polymer or second polymer was removed, the remaining polymer would still form a three-dimensional network, and vice versa). This may serve to increase the flexibility of the CPC. It has been surprisingly found that the use of a co-continuous blend results in the CPC exhibiting both a high flexibility and a high PTC effect. Accordingly, such a CPC may be advantageously employed in a flexible heating jacket.

The first polymer and second polymer may be rendered co-continuous by controlling a number of parameters such as, for example, the relative content of the two polymers (this usually happens when the ratio by volume nears 50:50, e.g. a ratio of from 30:70 to 70:30, typically from 40:60 to 60:40, more typically from 45:55 to 55:45), the relative viscosity of the two polymers, the presence of additives / fillers, the surface tension of the two polymers (and additives / fillers), and the processing steps employed. Such techniques are known in the art.

Preferably, the ratio of the first polymer to the second polymer is from 30:70 to 70:30, more preferably from 40:60 to 60:40, even more typically from 45:55 to 55:45. This may result in the polymers being co-continuous.

Preferably, the first polymer comprises one or more of high density polyethylene, (linear) low density polyethylene and polyvinyldifluoride. Such polymers are particularly suitable for use in the polymer matrix, in particular when the majority of the conductive particles are dispersed in the first polymer. Such polymers are also low cost and widely available. High density polyethylene may have a melt flow rate of about 18g/10 minutes

The conductive particles preferably comprise one or more of carbon particles, metal particles, metal-coated glass particles, metal-coated polymer particles and conductive polymer-coated particles. Such particles are particularly suitable for use in the CPCs, and may provide a particularly enhanced PTC effect. Suitable metals include, for example, one or more of silver, copper, nickel and gold. The term "metal" as used herein may encompass an alloy.

The conductive particles may be in the form of, for example, spheres, rods, fibres and/or flakes. The conductive particles are preferably spheres or flakes. The conductive particles may substantially all be the same shape and size. Alternatively, the conductive particles may have different shapes and size.

Preferably, at least 90 wt.% of the conductive particles have a longest dimension of greater than 1 µm, preferably from 3 to 200 µm, more preferably from 10 to 150 µm, even more preferably from 50 to 150 µm. The longest dimension is preferably at least 30 µm, more preferably at least 40 µm, even more preferably at least 50 µm. Such longest dimensions may be measured using a combination of optical microscopy and SEM. Without being bound by theory, it is considered that the smaller the particles the greater is the tendency of the particles to re-agglomerate at elevated temperatures, and therefore the greater the NTC effect is. Accordingly, when the conductive particles have longest dimensions in the ranges specified above, a combination of high PTC effect and low NTC effect may be provided.

Preferably, the conductive particles have an aspect ratio of from 1 to 200, preferably from 1 to 100, more preferably from 1 to 20, even more preferably from 1 to 15, still even more preferably from 1 to 10. The term "aspect ratio" used herein with regard to a particle may encompass the ratio of the longest dimension of the particle to the shortest dimension of the particle. Such aspect ratios may be measured by a combination of optical microscopy and SEM. When the particle is a sphere the aspect ratio will be 1. The percolation threshold, i.e. the wt.% of conductive particles that results in the conductivity of the CPC changing from that of the polymer matrix to that of the conductive particles, is inversely proportional to the aspect ratio. Accordingly, when the aspect ratio of the conductive particles is high, the percolation threshold can be reached using lower amounts of conductive particles. As a result, the manufacturing costs of the CPC may be reduced. Furthermore, the flexibility of the CPC may be increased, since higher levels of conductive particles may serve to reduce the flexibility. Moreover, without being bound by theory, it is considered that a more robust conductive network is formed by particles with higher aspect ratio, due to the increase in the number of particles in contact with each other. The thermal volume expansion of the polymer matrix may therefore have a less pronounced effect on the conductive network formed by higher aspect ratio particles and few conductive pathways are broken. This may lead to a relatively small increase in resistance, and hence a small PTC intensity. However, while low aspect ratio conductive particles may increase the PTC amplitude, their high percolation threshold is a disadvantage for cost and processability. Accordingly, when the conductive particles have aspect ratios in the ranges specified above, a combination of high PTC effect may be provided.

In an aspect of the disclosure:
the first polymer and the second polymer are co-continuous;
the majority of the conductive particles are dispersed in the first polymer;
the second polymer comprises a plastomer and/or elastomer;
at least 90 wt.% of the conductive particles have a longest dimension of from 50 to 150 µm;
the conductive particles are in the form of flakes and/or spheres; and
the conductive polymer composite comprises from 20 to 50 vol.% of the second polymer based on the total volume of the conductive polymer composite. Such a CPC exhibits a particularly reduced percolation threshold and a particularly high flexibility. Accordingly, such a CPC is particularly useful when employed in a flexible heating jacket.

In a further aspect, the present invention provides a method of manufacturing the conductive polymer composite as described herein comprising:
providing conductive particles, a first polymer and a second polymer, wherein the first polymer and second polymer are immiscible, and wherein the first polymer and/or the second polymer comprises an olefin-based plastomer;
dispersing the conductive particles in the first polymer or second polymer; and
blending together the first polymer and second polymer.

The method may comprise melt compounding using a twin screw extruder.

In a further aspect, the present invention provides a heating element comprising a plurality of electrodes and the conductive polymer composite as described herein disposed therebetween.

In a further aspect, the present invention provides a container heater comprising the heating element described herein.

The container heater may have a capacity of from 20 to 2000 litres. The container heater may have a generally cylindrical shape. Alternatively, the container heater may have a generally prismatic shape with a rectangular base. The prismatic shape may have curved corners.

In a further aspect, the present invention provides a heating jacket comprising the heating element as described herein. The heating jacket is preferably a flexible heating jacket. Due to the flexibility of the conductive polymer composite, the flexible heating jacket may advantageously be capable of rolling up on itself like a camping mattress, or at the very least folding over on itself so that it can be stored in between uses. Typically, this may cause no damage to the conductive polymer composite for the normal life of the jacket, which is typically expected to be a number of years. Typically, the flexibility of the conductive polymer composite allows the flexible heating jacket to be folded over on itself, e.g. to form a tube at the least. This may allow the flexible heating jacket to effectively heat an element to be heated, such as, for example, a pipe.

The flexible heating jacket may comprise a layer of thermal insulation and/or one or more outer protective layers covering the conductive polymer composite. With the additional layers, the flexible heating jacket typically has a thickness of from 5 to 25 mm. Even with such additional layers, due to the flexibility of the conductive polymer composite, the flexible heating jacket may typically still be able to at least fold over on itself.

In one typical example, when the conductive polymer composite is assembled into a finished heating jacket of thickness typically 5 to 25mm including insulation/additional layers, the finished product can be folded over upon itself for storage without significant damage to the heater, however many times this action is performed.

The flexible heating jacket is typically capable of being folded over on itself at least 100 times, more typically at least 500 times, even more typically at least 1000 times, still even more typically at least 10000 times without causing significant damage to the conductive polymer composite.

In a further aspect, the present invention provides a trace heater comprising the heating element described herein.

A description of the non-limiting Figures appended hereto is as follows:
Figure 1 is a schematic of a trace heater of the prior art.
Figure 2 is a schematic of the PTC effect for a CPC.
Figure 3 shows SEM images of the CPC of Example 1.
Figure 4 is a plot of PTC intensity versus plastomer content for the CPCs of Example 2.
Figure 5 is a plot of PTC intensity versus plastomer content for the CPCs of Example 3.
Figure 6 is a plot of storage modulus versus temperature for the CPCs of Example 4

The invention will now be described in relation to the following non-limiting examples.

### Example 1

A number of CPCs were prepared according to the following:
Materials: HDPE: Rigidex HD5218EA; plastomer: Versify from Dow; Ag-coated glass flakes 'small' - AgF_{S} (diameter: 5um; thickness: 1µm from NGF) and 'large' - AgF_{L} (diameter: 100um; thickness: 1µm from Glassflakes Ltd).

Method: Compounds of HDPE and AgF_{L} or AgF_{S}, at different fillers content, were prepared in a twin screw mini extruder at 170 °C and 50 rpm screw speed. The initial compounds were successively blended with different weight fraction of plastomer (10 wt.%, 20 wt.%, 30 wt.%) in a mini extruder at 170 °C and 50 rpm screw speed.

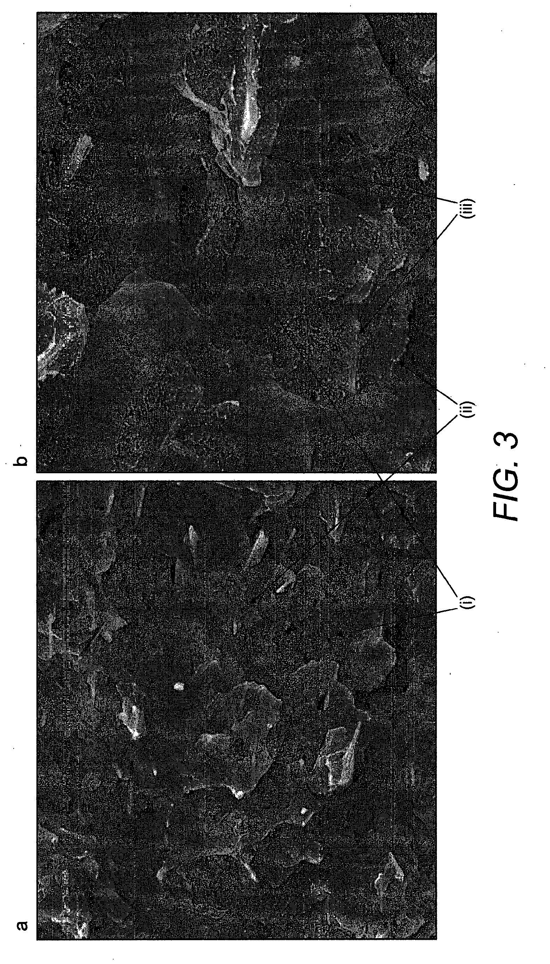

The SEM images in Figure 3 refer to the blend containing 30 wt.% of plastomer and 16 wt.% small flakes, AgF_{S}. The polymers form a co-continuous blend. The images show: (i) plastomer, (ii) HDPE and (iii) silver flake.

### Example 2

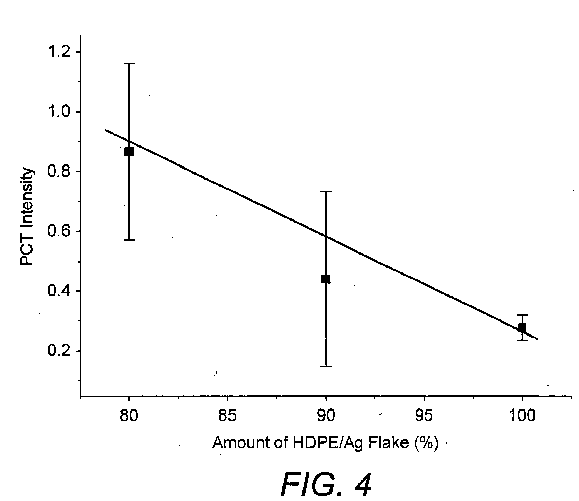

Three CPCs were prepared comprising 20 wt.% of AgF_{S}. The polymer matrix contained high density polyethylene together with 0 vol.% Versify@ (DOW) (reference example), 10 vol.% Versify@ (DOW) and 20 vol.% Versify@ (DOW). The PTC intensity was measured for each sample, and the results are shown in Figure 4.

### Example 3

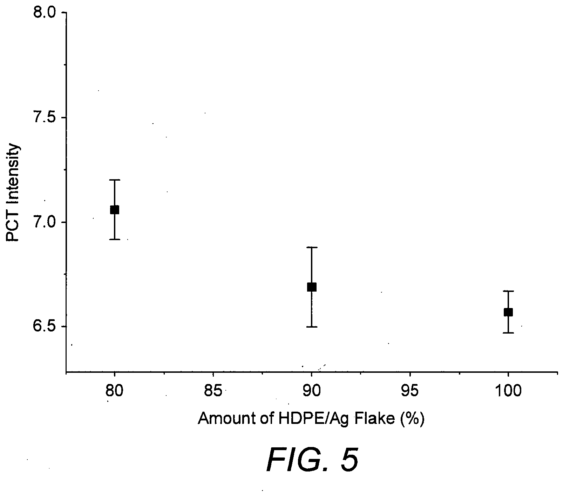

Three CPCs were prepared comprising 20 wt.% of AgF_{L}. The polymer matrix contained high density polyethylene together with 0 vol.% Versify@ (DOW) (reference example), 10 vol.% Versify@ (DOW) and 20 vol.% Versify@ (DOW). The PTC intensity was measured for each sample, and the results are shown in Figure 5.

### Example 4

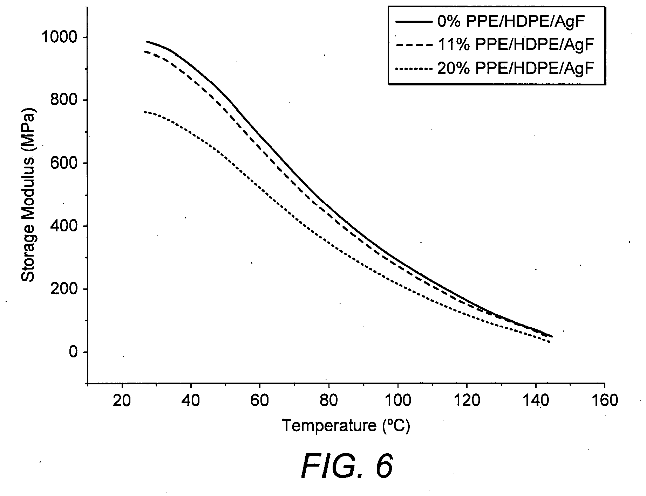

A number of conductive polymer composites were prepared containing AgFₛ, HDPE and varying amounts of PPE (0 wt.% (reference example), 11 wt.% and 20 wt.%). The dimensions of the CPCs were 30mm×10mm×4mm. Their stiffnesses were investigated using dynamic mechanical analysis (DMA), and the results are shown in Figure 6. As can be seen, an increase in temperature decreased the storage modulus of all of the composites. Without being bound by theory, it is considered that this is due to relaxation of the polymer chains. The storage modulus, which is related to the stiffness of the composite, decreased with increasing plastomer content.

## Claims

1. A conductive polymer composite comprising conductive particles dispersed in a polymer matrix, the polymer matrix comprising:
a first polymer; and
a second polymer,
wherein:
the first polymer and the second polymer are immiscible;
the majority of the conductive particles are dispersed in only one of the first polymer and the second polymer; and
the first polymer and/or the second polymer comprises a plastomer, **characterised in that** the plastomer is an olefin-based plastomer.

2. The conductive polymer composite of claim 1, wherein substantially all of the conductive particles are dispersed in only one of the first polymer and the second polymer.

3. The conductive polymer composite of claim 1 or claim 2, wherein the first polymer and/or the second polymer comprises an elastomer.

4. The conductive polymer composite of claim 3, wherein the elastomer comprises a cross-linked elastomer.

5. The conductive polymer composite of any preceding claim, wherein the majority of the conductive particles are dispersed in the first polymer and the second polymer comprises a plastomer and/or an elastomer.

6. The conductive polymer composite of claim 5, comprising from 1 to 50 vol.% of the second polymer based on the total volume of the conductive polymer composite.

7. The conductive polymer composite of any preceding claim, wherein the first polymer and the second polymer are co-continuous.

8. The conductive polymer composite of any preceding claim, wherein:
the first polymer comprises one or more of high density polyethylene, low density polyethylene and polyvinyldifluoride; and/or
the conductive particles comprise one or more of carbon particles, metal particles, metal-coated glass particles, metal-coated polymer particles and conductive polymer-coated particles; and/or
at least 90 wt.% of the conductive particles have a longest dimension of greater than 1 µm, preferably from 3 to 200 µm, more preferably from 10 to 150 µm, even more preferably from 50 to 150 µm; and/or
the conductive particles have an aspect ratio of from 1 to 200, preferably from 1 to 100, more preferably from 1 to 20, even more preferably from 1 to 15, still even more preferably from 1 to 10.

9. A method of manufacturing the conductive polymer composite of any preceding claim comprising:
providing conductive particles, a first polymer and a second polymer, wherein the first polymer and second polymer are immiscible, and wherein the first polymer and/or the second polymer comprises an olefin-based plastomer;
dispersing the conductive particles in the first polymer or second polymer; and
blending together the first polymer and second polymer.

10. A heating element comprising a plurality of electrodes and the conductive polymer composite of any of claims 1 to 8 disposed therebetween.

11. A container heater comprising the heating element of claim 10.

12. A heating jacket comprising the heating element of claim 10.

13. The heating jacket of claim 12, wherein the heating jacket is a flexible heating jacket.

14. A trace heater comprising the heating element of claim 10.

## Patentansprüche

1. Leitfähiger Polymerverbundwerkstoff, umfassend leitfähige Teilchen, die in einer Polymermatrix dispergiert sind, wobei die Polymermatrix umfasst:
ein erstes Polymer; und
ein zweites Polymer,
wobei:
das erste Polymer und das zweite Polymer nicht mischbar sind;
die Mehrheit der leitfähigen Teilchen in nur einem von dem ersten Polymer und dem zweiten Polymer dispergiert ist; und
das erste Polymer und/ oder das zweite Polymer ein Plastomer umfasst,
**dadurch gekennzeichnet, dass** das Plastomer ein Plastomer auf Olefinbasis ist.

2. Leitfähiger Polymerverbundwerkstoff nach Anspruch 1, bei dem im Wesentlichen alle leitfähigen Teilchen in nur einem von dem ersten Polymer und dem zweiten Polymer dispergiert sind.

3. Leitfähiger Polymerverbundwerkstoff nach Anspruch 1 oder 2, bei dem das erste Polymer und/ oder das zweite Polymer ein Elastomer umfasst.

4. Leitfähiger Polymerverbundwerkstoff nach Anspruch 3, bei dem das Elastomer ein vernetztes Elastomer umfasst.

5. Leitfähiger Polymerverbundwerkstoff nach einem der vorhergehenden Ansprüche, bei dem die Mehrheit der leitfähigen Teilchen in dem ersten Polymer dispergiert ist und das zweite Polymer ein Plastomer und/oder ein Elastomer umfasst.

6. Leitfähiger Polymerverbundwerkstoff nach Anspruch 5, der bezogen auf das Gesamtvolumen des leitfähigen Polymerverbundwerkstoffs 1 bis 50 Vol.-% des zweiten Polymers umfasst.

7. Leitfähiger Polymerverbundwerkstoff nach einem der vorhergehenden Ansprüche, bei dem das erste Polymer und das zweite Polymer co-kontinuierlich sind.

8. Leitfähiger Polymerverbundwerkstoff nach einem der vorhergehenden Ansprüche, bei dem:
das erste Polymer eines oder mehrere von Polyethylen hoher Dichte, Polyethylen niedriger Dichte und Polyvinyldifluorid umfasst; und/oder
die leitfähigen Teilchen eines oder mehrere von Kohlenstoffteilchen, Metallteilchen, metallbeschichteten Glasteilchen, metallbeschichteten Polymerteilchen und leitfähigen polymerbeschichteten Teilchen umfassen; und/oder
mindestens 90 Gew.-% der leitfähigen Teilchen eine längste Abmessung von mehr als 1 µm, vorzugsweise von 3 bis 200 µm, stärker bevorzugt von 10 bis 150 µm, noch stärker bevorzugt von 50 bis 150 µm aufweisen; und/oder
die leitfähigen Teilchen ein Seitenverhältnis von 1 bis 200, vorzugsweise von 1 bis 100, stärker bevorzugt von 1 bis 20, noch stärker bevorzugt von 1 bis 15, noch bevorzugter von 1 bis 10 haben.

9. Verfahren zur Herstellung des leitfähigen Polymerverbundwerkstoffs nach einem der vorhergehenden Ansprüche, umfassend:
Bereitstellen von leitfähigen Teilchen, einem ersten Polymer und einem zweiten Polymer,
wobei das erste Polymer und das zweite Polymer nicht mischbar sind, und wobei das erste Polymer und/ oder das zweite Polymer ein Plastomer auf Olefinbasis umfasst;
Dispergieren der leitfähigen Teilchen in dem ersten Polymer oder dem zweiten Polymer; und
Vermengen des ersten Polymers und des zweiten Polymers.

10. Heizelement, umfassend eine Mehrzahl von Elektroden und den dazwischen angeordneten leitfähigen Polymerverbundwerkstoff nach einem der Ansprüche 1 bis 8.

11. Behälterheizung, die das Heizelement nach Anspruch 10 umfasst.

12. Heizmantel, der das Heizelement nach Anspruch 10 umfasst.

13. Heizmantel nach Anspruch 12, wobei der Heizmantel ein flexibler Heizmantel ist.

14. Begleitheizung, die das Heizelement nach Anspruch 10 umfasst.

## Revendications

1. Composite polymère conducteur comprenant des particules conductrices dispersées dans une matrice polymère, la matrice polymère comprenant :
un premier polymère ; et
un deuxième polymère,
dans lequel :
le premier polymère et le deuxième polymère ne sont pas miscibles ;
la majorité des particules conductrices sont dispersées dans un seul du premier polymère et du deuxième polymère ; et
le premier polymère et/ou le deuxième polymère comprennent un plastomère,
**caractérisé en ce que** le plastomère est un plastomère à base d'oléfine.

2. Composite polymère conducteur de la revendication 1, dans lequel essentiellement la totalité des particules conductrices sont dispersées dans un seul du premier polymère et du deuxième polymère.

3. Composite polymère conducteur de la revendication 1 ou 2, dans lequel le premier polymère et/ou le deuxième polymère comprennent un élastomère.

4. Composite polymère conducteur de la revendication 3, dans lequel l'élastomère comprend un élastomère réticulé.

5. Composite polymère conducteur de l'une des revendications précédentes, dans lequel la majorité des particules conductrices sont dispersées dans le premier polymère et le deuxième polymère comprend un plastomère et/ou un élastomère.

6. Composite polymère conducteur de la revendication 5, comprenant 1 à 50 % en volume du deuxième polymère par rapport au volume total du composite polymère conducteur.

7. Composite polymère conducteur de l'une des revendications précédentes, dans lequel le premier polymère et le deuxième polymère sont co-continus.

8. Composite polymère conducteur de l'une des revendications précédentes, dans lequel :
le premier polymère comprend un ou plusieurs parmi un polyéthylène haute densité, un polyéthylène basse densité et un difluorure de polyvinyle ; et/ou
les particules conductrices comprennent une ou plusieurs parmi des particules de carbone, des particules métalliques, des particules de verre revêtues d'un métal, des particules de polymère revêtues d'un métal et des particules revêtues d'un polymère conducteur ; et/ou
au moins 90 % en poids des particules conductrices ont une dimension qui est la plus longue supérieure à 1 µm, de préférence de 3 à 200 µm, plus préférablement de 10 à 150 µm, encore plus préférablement de 50 à 150 µm ; et/ou
les particules conductrices ont un rapport de forme de 1 à 200, de préférence de 1 à 100, plus préférablement de 1 à 20, encore plus préférablement de 1 à 15, encore plus préférablement de 1 à 10.

9. Procédé de fabrication du composite polymère conducteur de l'une des revendications précédentes comprenant les étapes consistant à :
fournir des particules conductrices, un premier polymère et un deuxième polymère, où le premier polymère et le deuxième polymère ne sont pas miscibles, et où le premier polymère et/ou le deuxième polymère comprennent un plastomère à base d'oléfine ;
disperser les particules conductrices dans le premier polymère ou le deuxième polymère ;
et
mélanger ensemble le premier polymère et le deuxième polymère.

10. Élément chauffant comprenant une pluralité d'électrodes et le composite polymère conducteur de l'une des revendications 1 à 8 disposé entre elles.

11. Dispositif de chauffage pour récipient comprenant l'élément chauffant de la revendication 10.

12. Enveloppe chauffante comprenant l'élément chauffant de la revendication 10.

13. Enveloppe chauffante de la revendication 12, où l'enveloppe chauffante est une enveloppe chauffante flexible.

14. Dispositif de chauffage par traçage comprenant l'élément chauffant de la revendication 10.
